# EUROPEAN PATENT SPECIFICATION

(11) **EP 2 012 493 B1**
(45) Date of publication and mention of the grant of the patent: **28.04.2010**
(21) Application number: 08158293.4
(22) Date of filing: 13.06.2008
(51) Int. Cl.: H04L 29/06, G08G 5/00

(54) **Method for automated standby message response to reduce pilot and air traffic controller workload**
Verfahren für eine automatische Standby-Nachricht zur Reduktion der Steuerarbeitslast von Piloten und Luftverkehr
Procédé de répondeur à mise en veille automatique pour réduire la charge de travail du pilote et du contrôleur aérien

(30) Priority: 19.06.2007 US 765157
(43) Date of publication of application: 07.01.2009
(73) Proprietor: Honeywell International Inc., Morristown NJ 07962 (US)
(72) Inventor: McGuffin, Thomas F., Seattle, WA 98105 (US)
(74) Representative: Buckley, Guy Julian

(56) References cited:
- WO-A-2006/087276
- US-A1- 2003 006 910
- US-B1- 6 175 314

## Description

### BACKGROUND

Air traffic control (ATC) centers are used at most airports to coordinate take-offs, landings, and general aircraft traffic around the airport. Traditionally, a pilot uses a radio to speak to an ATC center to request permission or to receive instructions therefrom. With increasing air traffic it has become difficult for ATC centers to process all of the oral communications from aircraft. Consequently, data-link applications have been developed to provide textual communication between pilots and air traffic controllers.

One of these data-link applications, called Controller Pilot Data Link Communication (CPDLC), provides for the direct exchange of text-based messages between a controller and a pilot. The CPDLC enables the pilot to communicate electronically with an ATC center by guiding the pilot through a series of screen configurations or displays that either elicit flight information from the pilot or notify the pilot regarding flight information. The CPDLC may be part of a larger flight information/control program or may serve as a stand-alone program.

WO 2006/087276 discloses such CPDLC systems.

The CPDLC protocol as defined in Eurocae document ED110/RTCA doc 280 requires the pilot to respond to each ground message within 100 seconds. If the pilot needs more time then the pilot has to manually send a "STANDBY" message. The pilot then has 100 more seconds to respond from the time the STANDBY message was sent. If the pilot sends the STANDBY message shortly after receiving the ground message, say 20 seconds, then that does not maximize the amount of time to respond (20 s + 100 s = 120 s). The pilot can wait and try to send the STANDBY message just before the 100 second time limit expires in order to maximize the time to evaluate the message (*e.g.,* 99 s + 100 s = 199 s). If the pilot is busy and really needs more time to respond, then the last thing the pilot needs is another task to perform. The air traffic controller is in a similar high pressure situation but with a different time limit of 240 seconds to respond to an aircraft message.

### SUMMARY

The present invention provides a method as defined in Claim 1.

The method may include the features of any one or more of dependent Claims 2 to 7

The present invention also provides a medium as defined in Claim 8.

The present invention also provides a system as defined in Claim 9.

The system may include the features of Claim 10.

The present invention relates to a method for communicating an automatic standby message in response to an electronic text message in a network. The method comprises receiving a text message, starting a response timer for a first time period to respond, and monitoring whether a response message has been transmitted. If the response message has not been transmitted, a determination is made whether the response timer has reached a predetermined timing threshold. If the response timer has not reached the threshold, then the method continues to monitor whether the response message has been transmitted. If the response timer has reached the threshold without the response message being sent, a STANDBY message is transmitted automatically and the response timer is restarted for a second time period. The method then monitors whether the response message has been transmitted during the second time period. If the response message has not been transmitted during the second time period, a determination is made whether the response timer has expired. If the response timer has not expired, then the method continues to monitor whether the response has been transmitted during the second time period. If the response timer has expired without the response message being sent, the method disables any subsequent response message from being sent.

### BRIEF DESCRIPTION OF THE DRAWINGS

Features of the present invention will become apparent to those skilled in the art from the following description with reference to the drawings. Understanding that the drawings depict only typical embodiments of the invention and are not therefore to be considered limiting in scope, the invention will be described with additional specificity and detail through the use of the accompanying drawings, in which:

Figure 1 is a flow diagram representing a method for automatically sending a STANDBY message response according to one aspect of the invention;

Figure 2 is a flow diagram representing a method for varying a timing threshold for automatically sending the STANDBY message response according to Figure 1;

Figure 3 is a timing diagram representing a conventional communication between a sender and a receiver without using a STANDBY message automatic response; and

Figure 4 is a timing diagram representing a communication between a sender and a receiver that uses the STANDBY message automatic response according to the invention.

### DETAILED DESCRIPTION

In the following detailed description, embodiments are described in sufficient detail to enable those skilled in the art to practice the invention. It is to be understood that other embodiments may be utilized without departing from the scope of the present invention. The following detailed description is, therefore, not to be taken in a limiting sense.

The present invention is directed to a method for sending an automated STANDBY message response in order to reduce pilot and air traffic controller workload. The present method automatically maximizes the total time allowed to respond to a Controller Pilot Data Link Communication (CPDLC) message. In general, if a pilot has not responded to a CPDLC message within a specified time period, then the avionics software automatically sends a STANDBY message to the air traffic controller. The pilot's workload is reduced and the pilot automatically gets additional time to respond. Likewise, if the air traffic controller has not responded to a CPDLC message within a specified time, then the controller workstation software automatically sends a STANDBY message to the pilot. The air traffic controller's workload is thereby reduced and the controller automatically gets extra time to respond to the pilot.

The present method can be implemented for an aircraft by modifying conventional avionics software to add logic steps to detect when a specified time period has elapsed since an uplink CPDLC message was received without a pilot initiated response, and then automatically send a downlink STANDBY message to the air traffic controller. If the pilot responds before the time period has elapsed, then a STANDBY message is not sent.

The present method can be implemented for an air traffic control system on the ground by modifying the air traffic controller workstation software to add logic steps to detect when a specified time period has elapsed since a downlink CPDLC message was received without a controller initiated response, and then automatically send an uplink STANDBY message to the aircraft. If the controller responds before the time period has elapsed, then a STANDBY message is not sent.

It should be noted that the ground and avionics implementations of the present method utilize the same unique features but are independent of each other. Thus, the present method can function even if only one of the aircraft or the air traffic control system has been implemented with software for automatically sending a STANDBY message.

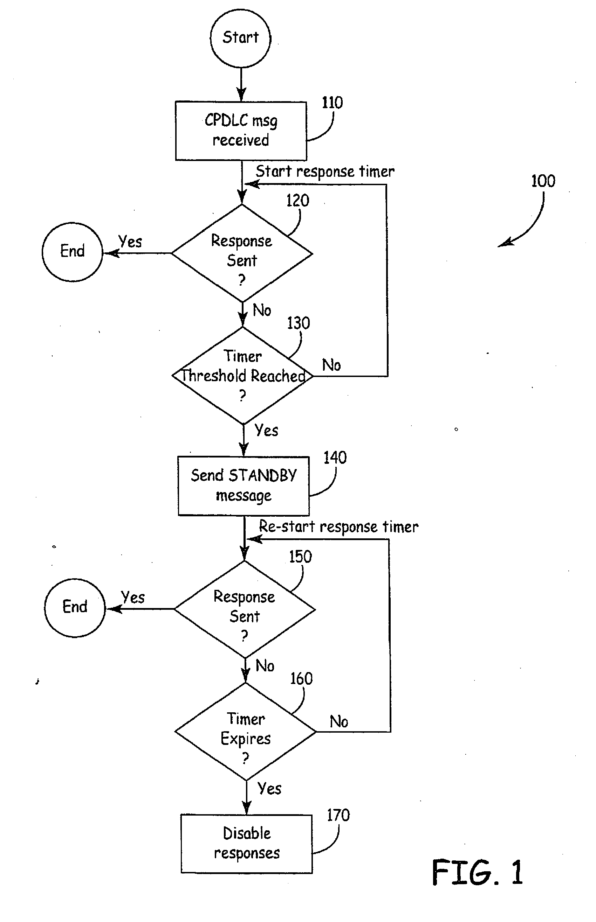

Figure 1 is a flow diagram representing a method 100 for communicating an automatic standby message in response to an electronic text message in a network. The method starts when a text message such as a CPDLC message is received by a pilot or an air traffic controller (block 110). A response timer is then started for a first time period and a determination is made whether the pilot/controller has sent a response message (block 120). If the response message has been sent, the method ends. If the response message has not been sent, a determination is made whether the response timer has reached a predetermined timing threshold (e.g., 90% of time elapsed) (block 130). If not, method 100 continues to monitor whether a pilot/controller response message has been sent and whether the response timer has reached the threshold. When the timer reaches the predetermined timing threshold with the response message still not sent, an automatic STANDBY message is transmitted (block 140) and the response timer is re-started for a second time period. A determination is then subsequently made whether the pilot/controller has sent the response message (block 150) during the second time period. If the response message has been sent during the second time period, the method ends. If the response message has not been sent during the second time period, a determination is made whether the timer has expired (block 160). If not, method 100 continues to monitor whether a pilot/controller response message has been sent and whether the response timer has expired. If the response timer expires without the response message being sent, any subsequent response message is disabled (block 170).

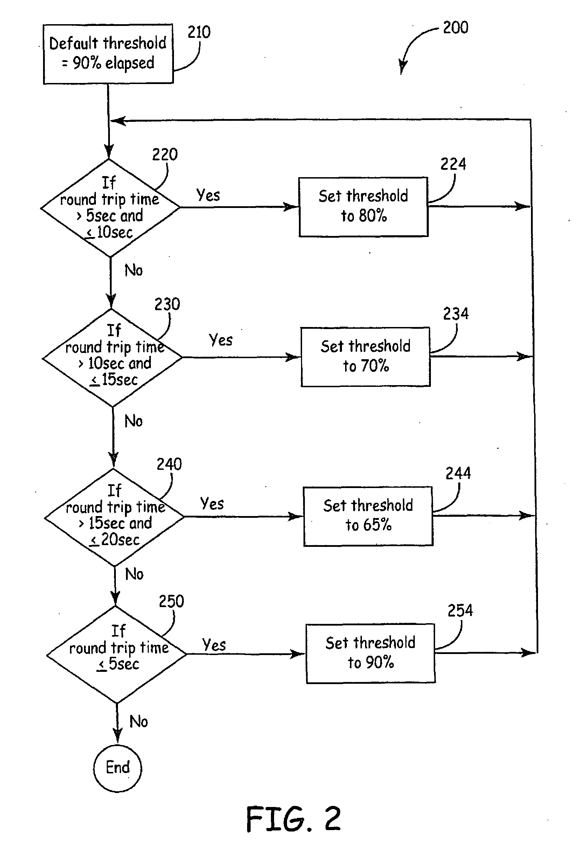

It should be noted that the predetermined timing threshold utilized in method 100 can be automatically varied as a function of network performance such as network response time. Figure 2 is a flow diagram representing an exemplary method 200 for automatically varying the timing threshold for transmitting the automatic STANDBY message based on the timing of a round trip message between a sender computer and a receiver computer. The round trip message time is the difference between the time of message transmission and the time of reception of an automatic acknowledgment from the receiver computer. In general, as network signal propagation delays become greater, the default timing threshold is reduced so that the automatic STANDBY message is transmitted earlier.

As shown in Figure 2, a timing threshold having a default value such as about 90% time elapsed is set (block 210), and a round trip message time is monitored. A determination is then made whether the round trip message time is within a first range, such as from greater than about 5 seconds up to about 10 seconds (block 220). If yes, then the threshold is set to a first value that is less than the default value, such as about 80% time elapsed (block 224), and the method continues to monitor the round trip message time; if no, a determination is then made whether the round trip message time is within a second range, such as from greater than about 10 seconds up to about 15 seconds (block 230). If yes, then the threshold is set to a second value that is less than the first value, such as about 70% time elapsed (block 234), and the method continues to monitor the round trip message time; if no, a determination is then made whether the round trip message time is within a third range, such as from greater than about 15 seconds up to about 20 seconds (block 240). If yes, then the threshold is set to a third value that is less than the second value, such as about 65% time elapsed (block 244), and the method continues to monitor the round trip message time; if no, a determination is then made whether the round trip message time is within a fourth range, such as about 5 seconds or less (block 250). If yes, then the threshold is set back to the default value such as about 90% (block 254), and the method continues to monitor the round trip message time. If the round trip message time is not within any of the foregoing decision blocks (e.g., greater than about 20 seconds), the method 200 ends and other message timing controls in the computer take over.

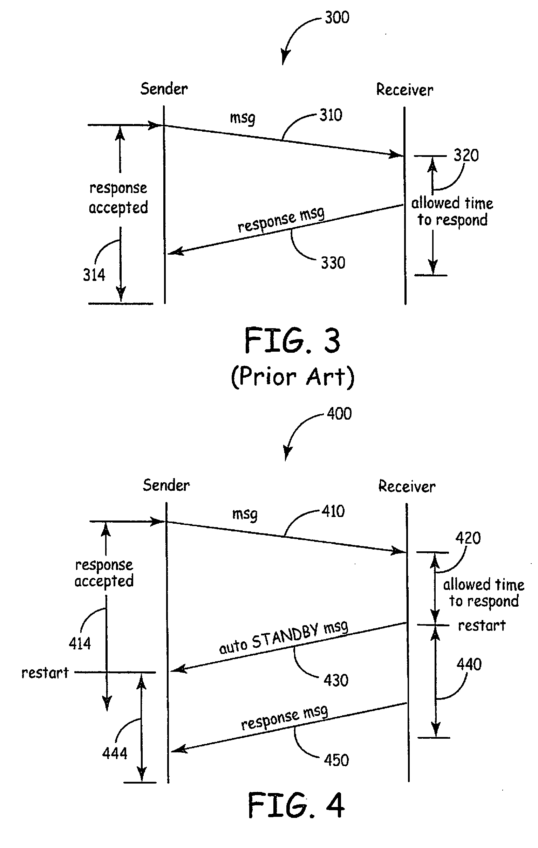

Figures 3 and 4 are comparative representations of the timing allowed for responding to CPDLC messages in a conventional pilot/controller communication method (Figure 3), and a pilot/controller communication method according to the invention (Figure 4) that provides additional time for sending a response.

Figure 3 depicts a timing diagram representing a communication method 300 between a sender (air traffic controller or pilot) and a receiver (pilot or air traffic controller) that does not use a STANDBY message automatic response. When a message (msg) 310 is transmitted by the sender, a sender timer is started that monitors a time period 314 to accept a response. The receipt of message 310 by the receiver starts a receiver timer that monitors an allowed time period to respond 320. The response message 330 needs to be sent back to the sender by the receiver before the time period to respond 320 expires or the response will be disabled. The response message 330 needs to be received by the sender before the time period 314 to accept a response expires or the response message will not be accepted by the sender computer.

Figure 4 is a timing diagram representing a communication method 400 between a sender (air traffic controller or pilot) and a receiver (pilot or air traffic controller) that uses a STANDBY message automatic response according to the present invention. When a message (msg) 410 is transmitted by the sender, a sender timer is started that monitors a time period 414 to accept a response. The receipt of message 410 from the sender starts a receiver timer that monitors an allowed time period to respond 420. When an automatic STANDBY message 430 is sent after a predetermined timing threshold, the receiver timer is restarted to give the receiver an additional time period to respond 440. When the STANDBY message 430 is received by the sender, the sender timer is restarted to give the sender an additional time period to accept a response 444. A response message 450 needs to be sent back to the sender by the receiver before the additional time period to respond 440 expires or any subsequent response message will be disabled. The response message 450 needs to be received by the sender before the additional time period to accept a response 444 expires or the response message will not be accepted by the sender computer.

In an exemplary implementation of the method of the invention, it is assumed that a pilot has 100 seconds to respond to each CPDLC message. If the pilot has not responded to the CPDLC message within a specified time period (e.g., 80 s), then the avionics software automatically sends a STANDBY message to the air traffic controller. The pilot's workload is reduced and the pilot automatically gets additional time *(e.g.,* 100 s) to respond, resulting in almost a doubling of the time period to respond *(e.g.,* 80s + 100 s = 180 s total time).

In another exemplary implementation of the method of the invention, it is assumed that an air traffic controller has 240 seconds to respond to each CPDLC message. If the air traffic controller has not responded to the CPDLC message within a specified time (e.g., 220 seconds), then the controller workstation software will automatically send a STANDBY message to the pilot. The air traffic controller's workload is thereby reduced and he or she automatically gets extra time (e.g., 240 s) to respond, resulting in almost a doubling of the time period to respond *(e.g.,* 220 s + 240 s = 460 s total time).

The present method can be implemented as part of the CPDLC software in an air traffic control computer; in a communication management function (CMF) of a communication management unit (CMU); in a flight management computer (FMC) such as an FMC hosting CPDLC applications; or in any other avionics computer in an aircraft. The present method can be a part of the communication protocols for future air navigation system (FANS) CPDLC systems, or aeronautical telecommunication network (ATN) CPDLC systems.

Instructions for carrying out the various process tasks, calculations, and generation of signals and other data used in the operation of the methods of the invention can be implemented in software, firmware, or other computer readable instructions. These instructions are typically stored on any appropriate computer readable medium used for storage of computer readable instructions or data structures. Such computer readable media can be any available media that can be accessed by a general purpose or special purpose computer or processor, or any programmable logic device.

Suitable computer readable media may comprise, for example, non-volatile memory devices including semiconductor memory devices such as EPROM, EEPROM, or flash memory devices; magnetic disks such as internal hard disks or removable disks; magneto-optical disks; CDs, DVDs, or other optical storage disks; nonvolatile ROM, RAM, and other like media; or any other media that can be used to carry or store desired program code means in the form of computer executable instructions or data structures. Any of the foregoing may be supplemented by, or incorporated in, specially-designed application-specific integrated circuits (ASICs). When information is transferred or provided over a network or another communications connection (either hardwired, wireless, or a combination of hardwired or wireless) to a computer, the computer properly views the connection as a computer readable medium. Thus, any such connection is properly termed a computer readable medium. Combinations of the above are also included within the scope of computer readable media.

The method of the invention can be implemented in computer readable instructions, such as program modules or applications, which are executed by a data processor. Generally, program modules or applications include routines, programs, objects, data components, data structures, algorithms, etc. that perform particular tasks or implement particular abstract data types. These represent examples of program code means for executing steps of the methods disclosed herein. The particular sequence of such executable instructions or associated data structures represent examples of corresponding acts for implementing the functions described in such steps.

The present invention may be embodied in other specific forms without departing from its essential characteristics. The described embodiments are to be considered in all respects only as illustrative and not restrictive. The scope of the invention is therefore indicated by the appended claims rather than by the foregoing description. All changes that come within the meaning and range of equivalency of the claims are to be embraced within their scope.

## Claims

1. A method for communicating an automatic standby message in response to an electronic text message in a network, the method comprising:
(a) receiving a text message;
(b) starting a response timer for a first time period to respond;
(c) monitoring whether a response message has been transmitted;
(d) if the response message has not been transmitted, determining whether the response timer has reached a predetermined timing threshold;
(e) if the response timer has not reached the predetermined timing threshold, repeating steps (c) and (d);
(f) if the response timer has reached the predetermined timing threshold without the response message being sent, transmitting automatically a standby message and restarting the response timer for a second time period;
(g) monitoring whether the response message has been transmitted during the second time period;
(h) if the response message has not been transmitted during the second time period, determining whether the response timer has expired;
(i) if the response timer has not expired, repeating steps (g) and (h); and
(j) if the response timer has expired without the response message being sent, disabling any subsequent response message from being sent.

2. The method of claim 1, wherein the text message is received by a pilot or an air traffic controller.

3. The method of claim 1, wherein the timing threshold is automatically varied as a function of network performance.

4. The method of claim 1, wherein the timing threshold is automatically varied based on a round trip message time between a sender computer and a receiver computer.

5. The method of claim 4, wherein the round trip message time is calculated as a difference between a message transmission time and a time of reception of an automatic acknowledgment from the receiver computer.

6. The method of claim 1, wherein the method is implemented as part of communication protocols for a future air navigation controller pilot data link communication (CPDLC) system, or an aeronautical telecommunication network CPDLC system.

7. The method of claim 1, wherein the text message is a CPDLC message.

8. A computer readable medium having instructions stored thereon for a method of communicating an automatic standby message in response to an electronic text message according to claim 1.

9. A computer system, comprising:
a computer readable medium having instructions stored thereon for a method of communicating an automatic standby message in response to an electronic text message according to claim 1.

10. The computer system of claim 9, wherein the computer system comprises a flight communication management unit, a flight management computer, or an air traffic control computer.

## Patentansprüche

1. Verfahren zum Übermitteln einer automatischen Standby-Nachricht als Antwort auf eine elektronische Textnachricht in einem Netz, mit den folgenden Schritten:
(a) Empfangen einer Textnachricht;
(b) Starten eines Antworttimers für einen ersten Zeitraum zum Antworten;
(c) Überwachen, ob eine Antwortnachricht übertragen wurde;
(d) wenn die Antwortnachricht nicht übertragen wurde, Bestimmen, ob der Antworttimer eine vorbestimmte Timingschwelle erreicht hat;
(e) wenn der Antworttimer die vorbestimmte Timingschwelle nicht erreicht hat, Wiederholen der Schritte (c) und (d);
(f) wenn der Antworttimer die vorbestimmte Timingschwelle erreicht hat, ohne dass die Antwortnachricht gesendet wurde, automatisches Übertragen einer Standby-Nachricht und Neustarten des Antworttimers für einen zweiten Zeitraum;
(g) Überwachen, ob die Antwortnachricht während des zweiten Zeitraums übertragen wurde;
(h) wenn die Antwortnachricht nicht während des zweiten Zeitraums übertragen wurde, Bestimmen, ob der Antworttimer abgelaufen ist;
(i) wenn der Antworttimer nicht abgelaufen ist, Wiederholen der Schritte (g) und (h); und
(j) wenn der Antworttimer abgelaufen ist, ohne dass die Antwortnachricht gesendet wurde, Sperren des Sendens jeglicher nachfolgender Antwortnachrichten.

2. Verfahren nach Anspruch 1, wobei ein Pilot oder ein Fluglotse die Textnachricht empfängt.

3. Verfahren nach Anspruch 1, wobei die Timingschwelle automatisch als Funktion der Netzleistungsfähigkeit variiert wird.

4. Verfahren nach Anspruch 1, wobei die Timingschwelle automatisch auf der Basis einer Nachrichtengesamtlaufzeit zwischen einem Absendercomputer und einem Empfängercomputer variiert wird.

5. Verfahren nach Anspruch 4, wobei die Nachrichtengesamtlaufzeit als Differenz zwischen einer Nachrichtenübertragungszeit und einem Zeitpunkt des Empfangs einer automatischen Bestätigung von dem Empfängercomputer berechnet wird.

6. Verfahren nach Anspruch 1, wobei das Verfahren als Teil von Kommunikationsprotokollen für ein zukünftiges Luftnavigationssystem der Lotsen-Pilot-Datenverbindungskommunikation bzw. CPDLC-System oder/ein CPDLC-System eines aeronautischen Telekommunikationsnetzes implementiert wird.

7. Verfahren nach Anspruch 1, wobei die Textnachricht eine CPDLC-Nachricht ist.

8. Computerlesbares Medium, auf dem Anweisungen für ein Verfahren zum Übermitteln einer automatischen Standby-Nachricht als Antwort auf eine elektronische Textnachricht nach Anspruch 1 gespeichert sind.

9. Computersystem, umfassend:
ein computerlesbares Medium, auf dem Anweisungen für ein Verfahren zum Übermitteln einer automatischen Standby-Nachricht als Antwort auf eine elektronische Textnachricht nach Anspruch 1 gespeichert sind.

10. Computersystem nach Anspruch 9, wobei das Computersystem eine Flugkommunikations-Verwaltungseinheit, einen Flugleitcomputer oder einen Fluglotsencomputer umfasst.

## Revendications

1. Procédé de communication d'un message automatique de mise en attente en réponse à un message textuel électronique dans un réseau, le procédé comportant les étapes consistant à :
(a) recevoir un message textuel ;
(b) démarrer un temporisateur de réponse pour un premier laps de temps de réponse ;
(c) contrôler si un message de réponse a été émis ;
(d) si le message de réponse n'a pas été émis, déterminer si le temporisateur de réponse a atteint un seuil prédéterminé de temporisation ;
(e) si le temporisateur de réponse n'a pas atteint le seuil prédéterminé de temporisation, répéter les étapes (c) et (d) ;
(f) si le temporisateur de réponse a atteint le seuil prédéterminé de temporisation sans que le message de réponse ait été envoyé, émettre automatiquement un message de mise en attente et redémarrer le temporisateur de réponse pour un deuxième laps de temps ;
(g) contrôler si le message de réponse a été émis au cours du deuxième laps de temps ;
(h) si le message de réponse n'a pas été émis au cours du deuxième laps de temps, déterminer si le temporisateur de réponse a expiré ;
(i) si le temporisateur de réponse n'a pas expiré, répéter les étapes (g) et (h) ; et
(j) si le temporisateur de réponse a expiré sans que le message de réponse ait été envoyé, neutraliser l'envoi de tout message de réponse ultérieur.

2. Procédé selon la revendication 1, le message textuel étant reçu par un pilote ou un contrôleur aérien.

3. Procédé selon la revendication 1, le seuil de temporisation variant automatiquement en fonction des performances du réseau.

4. Procédé selon la revendication 1, le seuil de temporisation variant automatiquement sur la base d'un temps d'aller-retour des messages entre un ordinateur émetteur et un ordinateur récepteur.

5. Procédé selon la revendication 4, le temps d'aller-retour des messages étant calculé comme une différence entre l'instant d'émission d'un message et l'instant de réception d'un accusé de réception automatique émanant de l'ordinateur récepteur.

6. Procédé selon la revendication 1, le procédé étant mis en oeuvre dans le cadre de protocoles de communications pour un système futur de communications contrôleur-pilote par liaison de données (CPDLC) ou un système CPDLC de réseau de télécommunications aéronautiques.

7. Procédé selon la revendication 1, le message textuel étant un message CPDLC.

8. Support lisible par ordinateur sur lequel sont mémorisées des instructions pour un procédé de communication d'un message automatique de mise en attente en réponse à un message textuel électronique selon la revendication 1.

9. Système informatique comportant :
un support lisible par ordinateur sur lequel sont mémorisées des instructions pour un procédé de communication d'un message automatique de mise en attente en réponse à un message textuel électronique selon la revendication 1.

10. Système informatique selon la revendication 9, le système informatique comportant une unité de gestion des communications de vol, un ordinateur de gestion de vol ou un ordinateur de contrôle aérien.
